# EUROPEAN PATENT SPECIFICATION

(11) **EP 1 935 050 B1**
(45) Date of publication and mention of the grant of the patent: **07.10.2009**
(21) Application number: 06741796.4
(22) Date of filing: 08.05.2006
(51) Int. Cl.: H01M 10/50

(54) **A HEAT DISSIPATING DEVICE FOR A BATTERY PACK, AND A BATTERY PACK USING THE SAME**
WÄRMEABLEITEINRICHTUNG FÜR EIN BATTERIEPACK UND BATTERIEPACK DAMIT
DISPOSITIF DISSIPATEUR DE CHALEUR POUR BATTERIE D'ALIMENTATION, ET BATTERIE D'ALIMENTATION UTILISANT LEDIT DISPOSITIF

(30) Priority: 08.11.2005 CN 200510115705; 30.03.2006 CN 200610066528
(43) Date of publication of application: 25.06.2008
(73) Proprietor: Byd Company Limited, Shenzhen 518118 (CN)
(72) Inventor: ZHU, Jianhua, Longgang Shenzen 518118 (CN); SHEN, Xi, Longgang Shenzhen 518118 (CN); HAN, Yili, Longgang Shenzhen 518118 (CN); LAI, Qing, Longgang Shenzen 518118 (CN)
(74) Representative: Jennings, Nigel Robin
(86) International application number: PCT/CN2006/000900
(87) International publication number: WO 2007/053993

(56) References cited:
- CN-A- 1 750 317
- JP-A- 09 326 263
- JP-A- 09 326 265
- JP-A- 10 055 827
- US-A1- 2003 051 859
- US-A1- 2005 077 030
- US-A1- 2005 139 992

## Description

### FIELD OF THE INVENTION

The present invention relates to a heat dissipating device, and more particularly, to a heat dissipating device for a battery pack and a battery pack using the same.

### BACKGROUND

Currently, the battery pack has been widely used in various fields such as the electric vehicles. As the consciousness of environment protection and energy conservation is enhanced, more attention is paid to the development of the electric vehicles. Under such circumstances, the battery pack, as the heart member of the electric vehicles, is becoming the key point in the study of the electric vehicles.

A battery pack may be formed by connecting a plurality of cells in series or in parallel in various ways, and then clamping and fixing the connected cells. The cell may be a conventional alkaline secondary cell, such as Ni-Cd cells, Ni-MH cells and so on, or a lithium-ion cell.

For example, CN 2450785 Y discloses a structure for fastening and assembling rectangular sealed cells which mainly comprises an end plate, a press plate and an insulated partition plate, wherein the cell and the insulated partition plate are placed in alternative manner to form a battery pack; the insulated partition plate is disposed on the outer sides of the both ends of the battery pack, and the end plate is disposed thereto; two press plates are respectively placed at the two sides of the battery pack, and fastened at the mounting position of the two end plates, and then the whole battery pack is fixed closely; and the cells are connected with each other with connecting pieces.

Since the battery pack has a high operating current, it will generate large quantities of heat during its operation. However, in the conventional battery pack, the heat generated by the battery pack could not be dissipated rapidly and efficiently, which will deteriorate the electrochemical property of the battery pack, and even result in some accidents such as battery heating, fire, and explosion.

US 20050139992 A1 discloses a cooling system for integrated circuits.

### DISCLOSURE OF THE INVENTION

An object of the present invention is to provide a heat dissipating device for a battery pack which can rapidly and efficiently dissipate the heat generated by the cells, so as to overcome the disadvantages of the prior battery pack that the generated heat could not be dissipated rapidly and efficiently.

Another object of the present invention is to provide a battery pack using the heat dissipating device.

According to one aspect of the present invention, a heat dissipating device for a battery pack comprises:
a heat collecting plate having a heat collecting channel therein;
a heat dissipating plate having a heat dissipating channel therein; and
a pump,
wherein, one port of the heat collecting channel is communicated with one port of the heat dissipating channel, the other port of the heat collecting channel is communicated with the liquid outlet of the pump, and the liquid inlet of the pump is communicated with the other port of the heat dissipating channel.

According to another aspect of the present invention, a battery pack comprises a plurality of cells connected in series or in parallel and further comprises a heat dissipating device which comprises:
a heat collecting plate of which the number is more than one and which has a heat collecting channel therein;
a heat dissipating plate having a heat dissipating channel therein; and
a pump,
wherein, the cell is interposed between two adjacent heat collecting plates;
one port of the heat collecting channel is communicated with one port of the heat dissipating channel, the other port of the heat collecting channel is communicated with the liquid outlet of the pump, and the liquid inlet of the pump is communicated with the other port of the heat dissipating channel; and
the heat collecting channels in the heat collecting plates are communicated in series or in parallel.

During the operation of the heat dissipating device, the heat generated by the cells can be collected in the heat collecting plate and absorbed by the cooling liquid pumped into the heat collecting channel by the pump, the cooling liquid carrying the heat flows into the heat dissipating channel, the heat is dissipated outwardly through the heat dissipating plate, and then the cooling liquid is repeatedly pumped from the heat dissipating channel into the heat collecting channel by the pump, such that the heat generated by the cells can be dissipated rapidly and efficiently.

### BRIEF DESCRIPTION OF THE DRAWINGS

Figure 1 is a perspective view schematically showing a heat dissipating device for a battery pack according to the present invention;
Figure 2 is a cross sectional view showing a heat dissipating device for a battery pack according to the present invention;
Figure 3 is a cross sectional view showing another heat dissipating device for a battery pack according to the present invention;
Figure 4 is a cross sectional view showing yet another heat dissipating device for a battery pack according to the present invention;
Figure 5 is a perspective view schematically showing a heat dissipating plate of a heat dissipating device for a battery pack according to the present invention;
Figure 6 is a perspective view schematically showing a battery pack according to the present invention;
Figure 7 is a cross sectional view showing a battery pack according to the present invention;
Figure 8 is a cross sectional view showing another battery pack according to the present invention;
Figure 9 is a cross sectional view showing yet another battery pack according to the present invention; and
Figure 10 is a view schematically showing the structure of a supporting frame.

### DESCRIPTION OF REFERENCE SIGNS

| | | | |
|---|---|---|---|
| 1 | heat collecting plate | 2 | heat dissipating plate |
| 3 | pump | 4 | cell |
| 5 | bolt | 6 | temperature sensor |
| 7 | ECU (electronic control unit) | 8 | supporting frame |
| 11 | heat collecting channel | 12 | heat dissipating channel |
| 13 | heat sink | 14 | connecting piece |
| 15 | beam | 16 | retaining slot |
| 17 | projection | 18 | grooves |

### DETAILED DESCRIPTION OF THE PREFERRED EMBODIMENTS

Hereinafter, the heat dissipating device for a battery pack and the battery pack using the same according to the present invention will be described in detail with reference to the drawings.

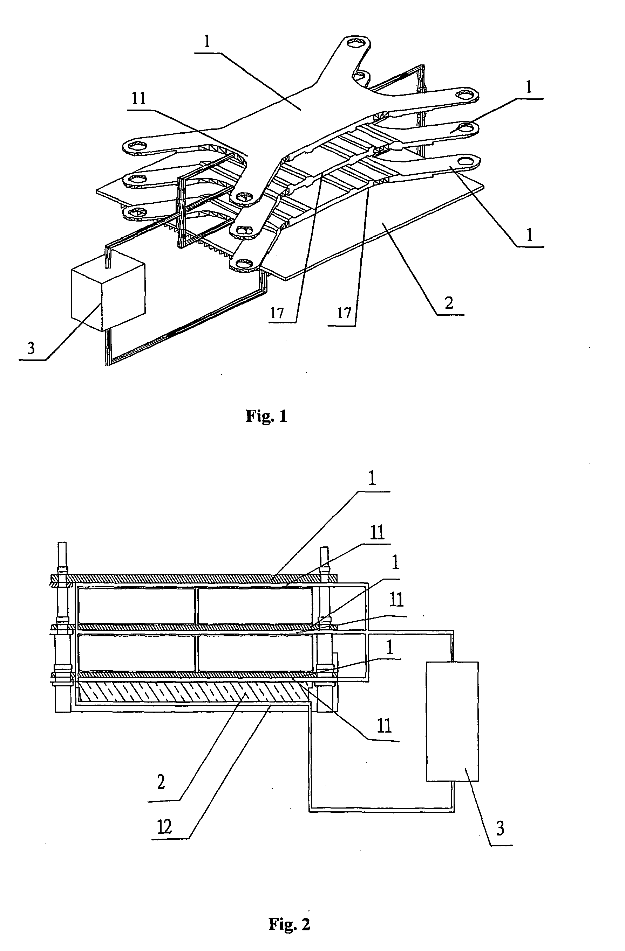

As shown in Figures 1 and 2, the present heat dissipating device for a battery pack comprises a heat collecting plate 1 having a heat collecting channel 11, a heat dissipating plate 2 having a heat dissipating channel 12, and a pump 3, wherein, one port of the heat collecting channel 11 is communicated with one port of the heat dissipating channel 12, the other port of the heat collecting channel 11 is communicated with the liquid outlet of the pump 3, and the liquid inlet of the pump 3 is communicated with the other port of the heat dissipating channel 12.

The heat collecting channel 11 and the heat dissipating channel 12 may contain cooling liquid therein. The cooling liquid may be various known liquids for cooling, and is preferably water. One port of the heat collecting channel 11 may be communicated with one port of the heat dissipating channel 12 by using a pipe, the other port of the heat collecting channel 11 may be communicated with the liquid outlet of the pump 3 by using a pipe, and the liquid inlet of the pump 3 may be communicated with the other port of the heat dissipating channel 12 by using a pipe. The pipe can be connected with the ports of the heat collecting channel, the heat dissipating channel and the pump by the following two methods: (1) the ports of the heat collecting channel, the heat dissipating channel and the pump are provided with thread, the ends of the pipe are provided with a connector having threads, and the connector is connected to the ports; and (2) the end of the pipe is inserted into the ports and then sealed with a sealing binder, and in this case the ports and the cross-section of the pipe may be of any shape such as circle, rectangular or polyangular.

During the operation of the heat dissipating device of the present invention, the cooling liquid is pumped into the heat collecting channel 11 by the pump 3 and absorbs the heat in the heat collecting plate 1, then the cooling liquid carrying the heat flows into the heat dissipating channel 12, the heat is dissipated from the heat dissipating plate 2, and then the cooling liquid is repeatedly pumped from the heat dissipating channel 12 into the heat collecting channel 11 by the pump, such that the heat generated by the cells can be dissipated rapidly and efficiently during the cycle of the cooling liquid.

The present invention does not intend to limit the heat collecting plate 1 to any specific materials. Preferably, the heat collecting plate can be made of the materials with excellent heat conductivity, such as aluminum alloy or copper alloy. Also, the number of the heat collecting plate 1 is not specially limited, and may be increased or decreased in practice. As shown in Figure 1, there are three heat collecting plates 1, i.e. a top heat collecting plate, a middle heat collecting plate, and a bottom heat collecting plate. Where there are multiple heat collecting plates 1, the heat collecting channels 11 in the heat collecting plates may be communicated with each other in parallel or in series, and preferably in parallel (as shown in Figures 1 to 4) which can more efficiently carry the heat outwardly.

According to one preferred embodiment, a projection 17 and/or a groove 18 are provided on the surface of the heat collecting plate 1. Preferably there are multiple heat collecting plates 1, and the projection 17 and/or groove 18 are provided on the surfaces facing each other of two adjacent heat collecting plates. The projections 17 and/or grooves 18 are disposed on one of or preferably both of the surfaces facing each other of two adjacent heat collecting plates. The projection 17 and/or groove 18 can be provided on one of or preferably both of the surfaces facing each other of two adjacent heat collecting plates. As shown in Figure 1, there are three heat collecting plates 1, i.e. top heat collecting plate, middle heat collecting plate, and bottom heat collecting plate, and the projections are provided on the surfaces of the top and bottom heat collecting plates 11 facing the middle heat collecting plate, and on both the surfaces of the middle heat collecting plate.

As shown in Figure 1, the projection 17 is provided on the surface of the heat collecting plate 1, and preferably there are more than one projections arranged longitudinally in parallel. Where the heat dissipating device is used for a battery pack which comprises a cell having grooves on its surfaces, the projections can mate with the grooves of each cell.

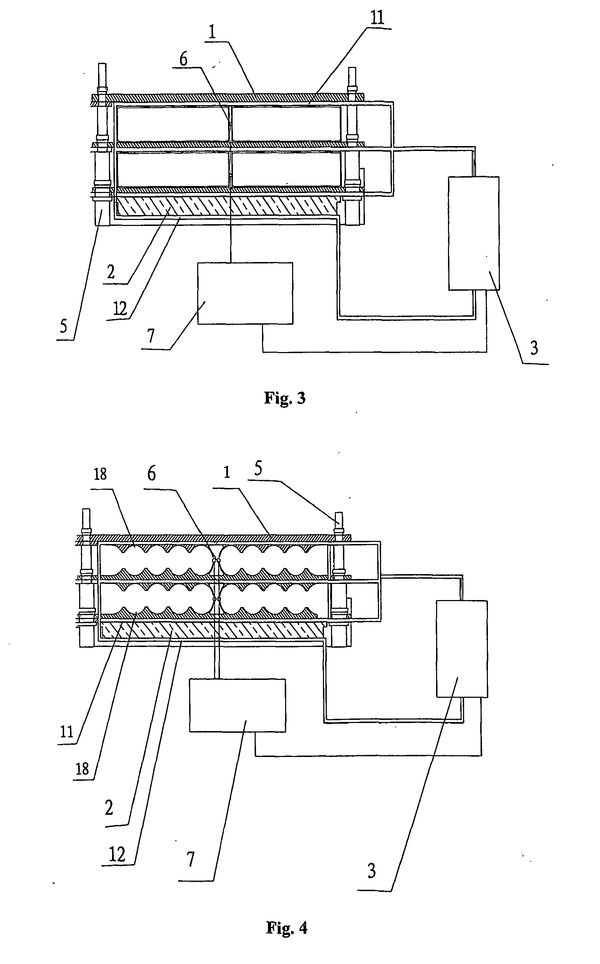

As shown in Figure 4, the groove 18 is provided on the surface of the heat collecting plate 1, and preferably there are more than one grooves arranged longitudinally in parallel. Where the heat dissipating device is used for a battery pack which comprises a cylindrical cell, the projections can mate with the surface of the cylindrical cell.

During the operation of the present heat dissipating device, the above-said embodiment can not only provide sufficient contact area between the heat collecting plate and the cell to effectively transmit heat generated by the cell, but also provide the positioning accuracy and the fix strength when assembling the cell, and as a result both the safety property and the heat dissipating property of the battery pack using the heat dissipating device can be improved.

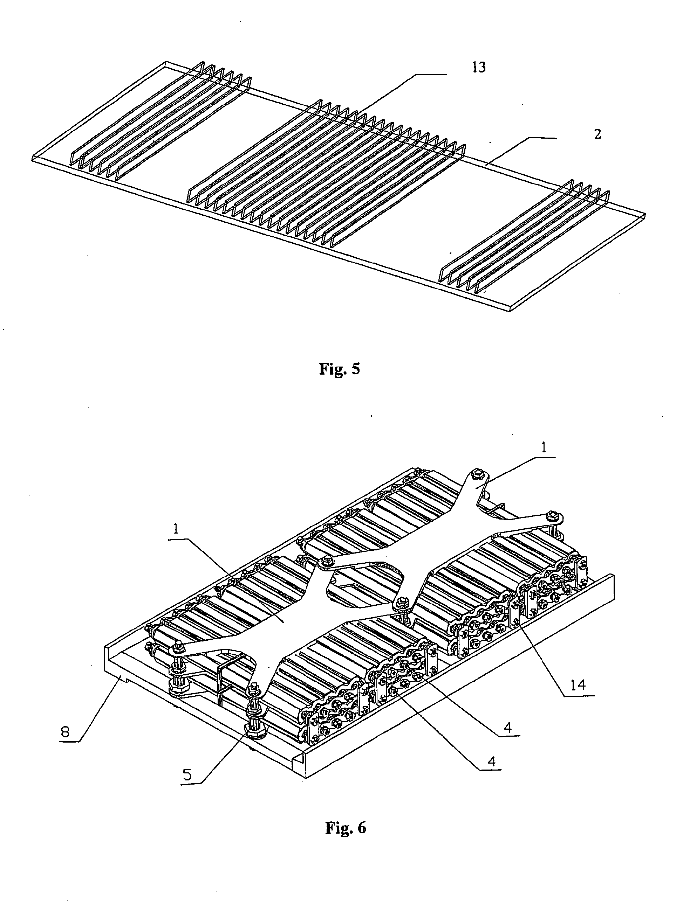

According to the present invention, the heat dissipating plate 2 can be made from various materials with good heat conductivity, for example but not limited to, aluminum alloy and copper alloy. Figure 5 shows the structure of the lower surface of the heat dissipating plate. As shown in Figure 5, a heat sink 13 is provided on the lower surface of the heat dissipating plate 2 to increase the heat dissipating area of the heat dissipating plate 2 and enhance the heat dissipating efficiency. According to the present invention, the number and mounting manners of the heat sink 13 may vary in practice. For example, as shown in Figure 5, the heat sink 13 may be longitudinally disposed on the lower surface of the heat dissipating plate 2. According to the present invention, the number of the heat dissipating plate is not specially limited. As shown in Figures 1 to 4, there is one heat dissipating plate 2. If there are more than one heat dissipating plates 2, the heat dissipating channels 12 in the plates 2 may be connected in parallel or in series, and preferably in parallel.

The pump 3 may be various conventional circular pumps, which are not specially limited in the present invention.

As shown in Figure 3, the present heat dissipating device may further comprise a temperature sensor 6.and an electronic control unit (ECU). The ECU 7 comprises an A/D converter, a programmable controller (PLC) and a frequency converter. The temperature sensor 6 is mounted on the heat collecting plate 1, the A/D converter is electrically connected with the temperature sensor 6 and the programmable controller, and the frequency converter is further electrically connected with the pump 3 and the programmable controller. The present invention does not intend to limit the temperature sensor 6 to any specific type, that is to say, it may be various conventional temperature sensors such as an infrared temperature detector. The temperature sensor 6 may be adhered onto the heat collecting plate 1 by adhesive such as adhesive silica gel. Where there are more than one heat collecting plates, each heat collecting plate has one temperature sensor mounted thereon. The PLC of the ECU 7 is used to program the rotation speed of the pump depending on the signal of the temperature.

The temperature sensor 6 may detect the temperature of the heat collecting plate 1, and transmit the detected temperature value to the A/D converter of the ECU 7 where the value is converted from analog signal into digital signal and then transmitted to the PLC. The PLC sends an instruction according to predetermined program. According to the instruction, the frequency converter controls the pump 3 to rotate at a corresponding speed. The rotation speed of the pump 3 is depending on the temperature of the heat collecting plate 1. When the temperature is high, which indicates more heat is generated by the battery pack, the pump 3 will rotate at a higher speed such that the heat can be carried out rapidly and the safety of the battery pack can be guaranteed. When the temperature is low, which indicates less heat is generated by the battery pack, the pump 3 will rotate at a lower speed or even stop, so as to save the energy.

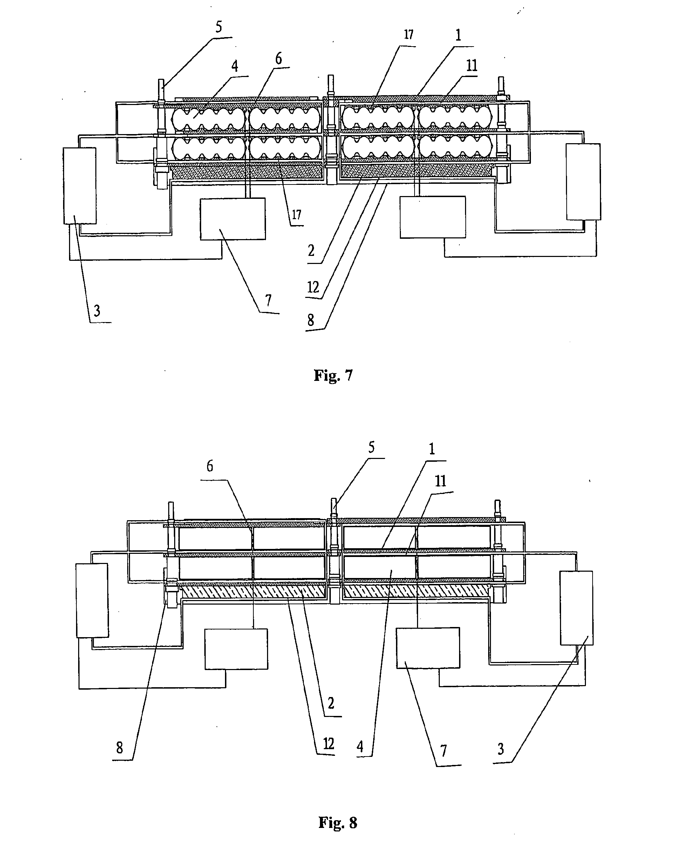

As shown in Figures 6 and 7, the present battery pack comprises a plurality of cells 4 connected in series or in parallel, and further comprises a heat dissipating device which comprises a heat collecting plate 1, a heat dissipating plate 2, and a pump 3. The number of the heat collecting plate 1 is more than one, and the cell 4 is interposed between two heat collecting plates. The heat collecting plates 1 each has a heat collecting channel 11 therein, and the heat dissipating plate 2 has a heat dissipating channel 12. One port of the heat collecting channel 11 is communicated with one port of the heat dissipating channel 12, the other port of the heat collecting channel 11 is communicated with the liquid outlet of the pump 3, and the liquid inlet of the pump 3 is communicated with the other port of the heat dissipating channel 12. The heat collecting channels 11 in the heat collecting plates 1 are communicated in series or in parallel.

The heat collecting channels 11 are preferably connected in parallel in order to more effectively carry out the heat, i.e. the heat generated by cells 4, from the heat collecting plate 1. The heat collecting plate 1, the heat dissipating plate 2, the pump 3, the heat collecting channel 11 and the heat dissipating channel 12 have been described in detail above, and more details are omitted here.

As shown in Figure 6, the cells 4 can be connected in series or in parallel by means of a connecting piece 14 conventionally used for connecting cells.

As shown in Figure 6, the present battery pack may further comprise a supporting frame 8 on which the heat collecting plate 1 and the heat dissipating plate 2 may be mounted by any known means. For example, in one embodiment of the present invention, the heat collecting plate 1 and the supporting frame 8 respectively have a through hole therein, and a bolt 5 is provided to insert through the through holes and fastened by a nut. The bolt 5 is preferably a stepped bolt. In this embodiment, each cell 4 is positioned between two adjacent heat collecting plates which are connected by the stepped bolt, such that the cell can be mounted stably between the two plates without any pressure stress, to prevent the cells from shifting by the shock of the outside force in case of concussion and the like, the short circuit in the battery pack can be avoided, and the mechanical safety of the battery pack is thus enhanced.

Preferably, the contacting surfaces between the heat collecting plate 1 and the cells 4 may be coated with a heat conductive adhesive, which not only enhances the connection strength between the plates and the cells to improve the mechanical safety property of the present battery pack, but also conducts the heat generated by the cells to the heat collecting plate to increase the heat dissipating efficiency. Any known heat conductive adhesive may be used, and preferably heat conductive silica gel is used as the heat conductive adhesive.

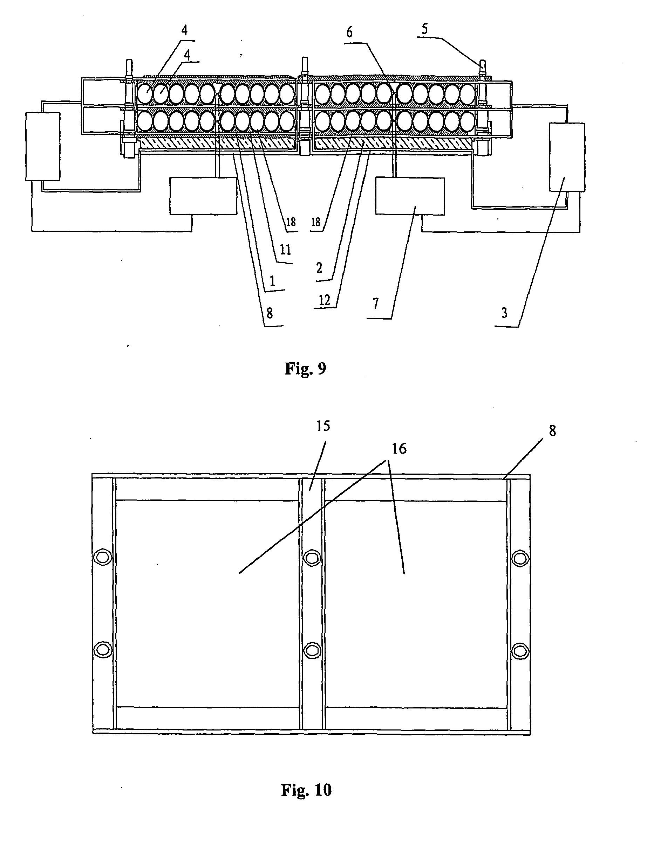

As shown in Figure 10, the supporting frame 8 may comprise three parallel beams 15 and two fixing grooves 16 between the beams 15. The heat dissipating plate 2 can be mounted on the supporting frame 8 by means of the fixing groove 16, and then the heat collecting plate 1 is mounted on the heat dissipating plate 2.

According to the present invention, various kinds of cells can be used in the battery pack, for example but not limited to, alkaline secondary cells such as Ni-Cd, Ni-Zn and Ni-MH cells, and lithium-ion cells.

The present invention does not intend to limit the cells to any specific numbers or quantities. That is to say, the number of the cells can be increased or decreased in practice. The number of the corresponding heat collecting plates also can be increased or decreased. As shown in Figures 7 and 8, there are 8 cells divided into two layers, 6 heat collecting plates, and 2 heat dissipating plates. As shown in Figure 9, there are 40 cells divided into two layers, 6 heat collecting plates, and 2 heat dissipating plates.

The present invention does not intend to limit the cell to any specific shapes. The cell may be shaped as a hexagonal combined body as shown in Figure 7, a rectangular single body as shown in Figure 8, or a cylindrical single body as shown in Figure 9.

According to one embodiment of the present invention, as shown in Figure 7, the cell 4 has grooves on its surface, and the heat collecting plate 1 has projections 17 mating with the grooves on its surfaces contacting with the cell 4. The projections may be formed on either or both of the opposite surfaces of two adjacent heat collecting plates contacting with the same cell 4, and preferably on both of the opposite surfaces.

According to another embodiment of the present invention, as shown in Figure 9, the cell 4 is the cylinder single cell, and the bottom heat collecting plate 1 has grooves 18 mating with the surface of the cylinder cell. The grooves 18 may be formed on either or both of the opposite surfaces of two adjacent heat collecting plates contacting with the same cell 4, and preferably on both of the opposite surfaces.

In the above two embodiments, there is sufficient contacting area between the heat collecting plate 1 and the cell 4 to transmit the heat generated by the cell, and at the same time the positioning accuracy and the fix strength can be enhanced during assembling the cell.

As shown in Figures 7-9, the present heat dissipating device may further comprise an ECU 7 and a plurality of temperature sensors 6. The ECU 7 comprises an A/D converter, a programmable controller (PLC) and a frequency converter. The temperature sensor 6 is mounted on each cell 4 or heat collecting plate 1. The A/D converter is electrically connected with the temperature sensor 6 and the programmable controller, and the frequency converter is electrically connected with the pump 3 and the programmable controller. The present invention does not intend to limit the temperature sensor 6 to any specific types, that is to say, it may be various conventional temperature sensors such as an infrared temperature detector. The temperature sensors 6 is preferably adhered onto each cell by adhesive such as adhesive silica gel. The operation principle of the temperature sensor and the ECU has been described in detail above, and will not be described here.

Hereinafter, the assemble procedure of the battery pack of the present invention will be described with reference to the battery pack shown in Figure 7.
1, placing two heat dissipating plates 2 respectively into the fixing grooves 16 of the supporting frame 8; inserting six bolts 5 (stepped bolts) through the through holes of the beams, mounting two heat collecting plates 1 respectively onto the two heat dissipating plates 2 by means of the first stage of the stepped bolts; and then fixing them by fastening the first nuts on the stepped bolts;
2, coating the upper surface of the bottom heat collecting plate 1 with heat conductive silica gel; placing four cells 4, each of which has one temperature sensor 6 (infrared temperature detector) adhered onto by heat conductivity silica gel, onto the bottom heat collecting plate 1 in alignment with the projections 17 thereon; coating the surface of the cells 4 with heat conductive silica gel; placing two heat collecting plates 2 onto the cells 4 in alignment with the grooves of the cells 4; and then fastening the second nuts on the stepped bolts;
3, repeating the above step 2, placing the second layer of cells, each of which has one temperature sensor 6 (infrared temperature detector) adhered onto by heat conductivity silica gel, placing another two heat collecting plates onto the second layer of cells, and fastening the third nuts on the stepped bolts;
4, using a heat insulated pipe with screwed ends to communicating one port of the heat collecting channel 11 with one port of the heat dissipating channel 12, another port of the heat collecting channel 11 with the outlet of the pump 3, and another port of the heat dissipating channel 12 with the inlet of the pump, wherein the heat collecting channel, the pump and the heat dissipating channel all have screws at their ports;
5, connecting the temperature sensor with the input port of the ECU 7 by signal lines;
6, connecting the output port of the ECU 7 with the pump 3 by signal lines;
7, connecting all the cells 4 together with connecting pieces 14, to form a battery pack.

## Claims

1. A battery pack comprising a plurality of cells (4) connected in series or in parallel, **characterized in that**, it further comprises a heat dissipating device which comprises:
heat collecting plates (1) of which the number is more than one and which has a heat collecting channel (11) therein;
a heat dissipating plate (2) having a heat dissipating channel (12) therein; and
a pump (3),
wherein, the cell (4) is interposed between two adjacent heat collecting plates (1);
one port of the heat collecting channel (11) is communicated with one port of the heat dissipating channel (12), the other port of the heat collecting channel (11) is communicated with the liquid outlet of the pump (3), and the liquid inlet of the pump (3) is communicated with the other port of the heat dissipating channel (12); and
the heat collecting channels (11) in the heat collecting plates (1) are communicated in series or in parallel.

2. The battery pack as claimed in claim 1, wherein,
the heat collecting channel (11) and the heat dissipating channel (12) contain cooling liquid therein.

3. The battery pack as claimed in claim 1, further comprising:
a supporting frame (8) on which the heat collecting plate (1) and the heat dissipating plate (2) are respectively mounted.

4. The battery pack as claimed in claim 1, wherein,
the contacting surfaces between the heat collecting plates (1) and the cells (4) are coated with a heat conductive adhesive.

5. The battery pack as claimed in claim 1, wherein,
the cells (4) have grooves on the surface thereof; and
the heat collecting plates (1) have projections (17) mating with the grooves on their surfaces contacting with the cells (4).

6. The battery pack as claimed in claim 1, wherein,
the cells (4) are cylindrical cells; and
the heat collecting plates (1) have grooves (18) mating with the surface of the cylindrical cells on their surfaces contacting with the cells (4).

7. The battery pack as claimed in claim 1, wherein, the heat dissipating device further comprises:
a plurality of temperature sensors (6) each of which is mounted on each cell (4) or the each heat collecting plate (1); and
an electronic control unit (7) comprising an A/D converter, a programmable controller and a frequency converter;
the A/D converter being electrically connected with the each temperature sensor (6) and the programmable controller, and the frequency converter being electrically connected with the pump (3) and the programmable controller.

## Patentansprüche

1. Batteriepack mit einer Mehrzahl von Zellen (4), die in Reihe oder parallel geschaltet sind, **dadurch gekennzeichnet, dass** er weiters eine Wärmeableiteinrichtung umfasst, die enthält:
Wärmesammelplatten (1), deren Anzahl über 1 liegt und die im Inneren einen Wärmesammelkanal (11) aufweisen;
eine Wärmeableitplatte (2) mit einem Wärmeableitkanal (12) im Inneren; und
eine Pumpe (3),
wobei die Zelle (4) zwischen zwei benachbarten Wärmesammelplatten (1) angeordnet ist;
wobei eine Öffnung des Wärmesammelkanals (11) mit einer Öffnung des Wärmeableitkanals (12) in Verbindung steht, wobei die andere Öffnung des Wärmesammelkanals (11) mit dem Flüssigkeitsauslass der Pumpe (3) in Verbindung steht, und wobei der Flüssigkeitseinlass der Pumpe (3) mit der anderen Öffnung des Wärmeableitkanals (12) in Verbindung steht; und
wobei die Wärmesammelkanäle (11) in den Wärmesammelplatten (1) in Reihe oder parallel in Verbindung stehen.

2. Batteriepack nach Anspruch 1, wobei der Wärmesammelkanal (11) und der Wärmeableitkanal (12) im Inneren Kühlflüssigkeit enthalten.

3. Batteriepack nach Anspruch 1, weiters mit einem Stützrahmen (8), auf dem die Wärmesammelplatte (1) und die Wärmeableitplatte (2) jeweils gelagert sind.

4. Batteriepack nach Anspruch 1, wobei die Kontaktflächen zwischen den Wärmesammelplatten (1) und den Zellen (4) mit einem wärmeleitenden Haftmittel beschichtet sind.

5. Batteriepack nach Anspruch 1, wobei:
die Zellen (4) an ihrer Oberfläche Nuten aufweisen; und
die Wärmesammelplatten (1) Vorsprünge (17) haben, die den Nuten den Flächen entsprechen, die die Zellen (4) kontaktieren.

6. Batteriepack nach Anspruch 1, wobei:
die Zellen (4) zylindrische Zellen sind; und
die Wärmesammelplatten (1) Nuten (18) aufweisen, die der Oberfläche der zylindrischen Zellen an ihren Oberflächen, die die Zellen (4) kontaktieren, entsprechen.

7. Batteriepack nach Anspruch 1, wobei die Wärmeableiteinrichtung weiters umfasst:
eine Mehrzahl von Temperatursensoren (6), wobei jeder davon auf jeder Zelle (4) oder jeder Wärmesammelplatte (1) angeordnet ist; und
eine elektronische Regeleinheit (7), die einen A/D-Wandler, eine programmierbare Steuerung und einen Frequenzwandler aufweist;
wobei der A/D-Wandler mit jedem Temperatursensor (6) und der programmierbaren Steuerung elektrisch verbunden ist, und wobei der Frequenzwandler mit der Pumpe (3) und der programmierbaren Steuerung elektrisch verbunden ist.

## Revendications

1. Batterie comprenant une pluralité de cellules (4) reliées en série ou en parallèle, **caractérisée en ce qu'**elle comprend également un dispositif de dissipation thermique comprenant :
des plaques de récupération de chaleur (1) dont le nombre est supérieur à un comportant un canal de récupération de chaleur (11) dans celles-ci ;
une plaque de dissipation de chaleur (2) comportant un canal de dissipation de chaleur (12) dans celle-ci ; et
une pompe (3),
dans lequel la cellule (4) est intercalée entre deux plaques de récupération de chaleur (1) adjacentes ;
un orifice du canal de récupération de chaleur (11) est en communication avec un orifice du canal de dissipation de chaleur (12), l'autre orifice du canal de récupération de chaleur (11) est en communication avec la sortie de liquide de la pompe (3), et l'entrée de liquide de la pompe (3) est en communication avec l'autre orifice du canal de dissipation de chaleur (12); et
les canaux de récupération de chaleur (11) dans les plaques de récupération de chaleur (1) sont en communication en série ou en parallèle.

2. Batterie selon la revendication 1, dans laquelle :
le canal de récupération de chaleur (11) et le canal de dissipation de chaleur (12) contiennent un liquide de refroidissement.

3. Batterie selon 1a revendication 1, comprenant également :
une armature de support (8) sur laquelle la plaque de récupération de chaleur (1) et la plaque de dissipation de chaleur (2) sont montées, respectivement.

4. Batterie selon la revendication 1, dans laquelle :
les surfaces de contact entre les plaques de récupération de chaleur (1) et les cellules (4) sont recouvertes d'un adhésif conducteur de chaleur.

5. Batterie selon la revendication 1, dans laquelle :
les cellules (4) comportent des rainures sur la surface de celles-ci ; et
les plaques de récupération de chaleur (1) comportent des saillies (17) s'accouplant avec les rainures sur leurs surfaces en contact avec les cellules (4).

6. Batterie selon la revendication 1, dans laquelle :
les cellules (4) sont des cellules cylindriques ; et
les plaques de récupération de chaleur (1) comportent des rainures (18) s'accouplant avec la surface des cellules cylindriques sur leurs surfaces en contact avec les cellules (4).

7. Batterie selon la revendication 1, dans laquelle le dispositif de dissipation thermique comprend également :
une pluralité de capteurs de température (6), chacun d'eux étant monté sur chaque cellule (4) ou chaque plaque de récupération de chaleur (1) ; et
une unité de commande électronique (7) comprenant un convertisseur analogique-numérique, un contrôleur programmable et un convertisseur de fréquence ;
le convertisseur analogique-numérique étant relié électriquement à chaque capteur de température (6) et le contrôleur programmable et le convertisseur de fréquence étant reliés électriquement à la pompe (3) et au contrôleur programmable.
